Europäisches Patentamt

European Patent Office

Office européen des brevets

(11) Publication number: **0 134 693**
**A2**

(12) **EUROPEAN PATENT APPLICATION**

(21) Application number: **84305168.1**

(22) Date of filing: **30.07.84**

(51) Int. Cl.⁴: **H 04 M 17/02**
**H 04 M 15/30**

(30) Priority: **05.08.83 GB 8321171**

(43) Date of publication of application:
**20.03.85 Bulletin 85/12**

(84) Designated Contracting States:
**AT BE DE GB IT**

(71) Applicant: **RATHDOWN INDUSTRIES LIMITED**
**Goodwood Works 17 London Road**
**Ascot Berkshire, SL5 7EP(GB)**

(72) Inventor: **Fewings, Donald Ivor**
**Willow House Old Green Lane**
**Camberley Surrey(GB)**

(74) Representative: **MATTHEWS HADDAN & CO**
**Haddan House 33 Elmfield Road**
**Bromley, Kent BR1 1SU(GB)**

(54) **Payphone.**

(57) A portable payphone includes housing 10 containing coin receipt and internal validation mechanisms. A display 16 provides the credited time for the coin entered and decrements as the call progresses. This credited time is calculated internally by detecting dialled number information from keyboard 12 and using this to access an internal memory. The accessed information is used to compute the time available from a knowledge of the coin value and time of day also provided internally, without intervention from the telephone exchange.

FIG. 1a

FIG. 1b

Croydon Printing Company Ltd.

TITLE:   PAYPHONE.


The invention relates to payphones and typically to a self-contained payphone that can be plugged into an existing socket without requiring special circuit arrangements with the exchange when operational.

With such payphones there is a requirement for accurate charge computation together with ease of operation and display parameters helpful to the phone user.

The present invention is concerned with providing an improved configuration.

According to the invention there is provided a payphone characterised by display means for displaying information pertaining to a telephone call, credit means for receiving an item for use as payment for a call, validator means for determining the validity of the item received, and decremental calculation means for determining the remaining time period of credit available for the connected call during call progress, for display by the display means.

The invention will now be described by way of example with reference to the accompanying drawings in which:-

FIGURE 1a shows a plan view of an embodiment of the payphone of the invention;

FIGURE 1b shows the rear view;

FIGURE 2 shows a coin handling and detection mechanism for use therein;

FIGURE 3a, 3b, 4a and 4b shows schematic sectional view details of the coin testing mechanisms taken along the line C-C of Figure 2;

FIGURE 5 shows a sectional detail of the refund arrangement along line 'B-B' of Figure 2;

FIGURE 6 shows a sectional detail of the collect mechanism along line 'A-A' of Figure 2;

FIGURE 7 shows a plan view of the payphone with the case open to show the coin storage area;

FIGURE 8 shows an embodiment of the payphone;

FIGURE 9 shows a more detailed configuration for charge band operation;

FIGURE 10 shows an alternative configuration to Figure 8 employing a microprocessor;

FIGURES 11, 12 and 13 show flowcharts pertaining to Figure 10.

In the embodiments described, a small self-contained unit is provided with its own integral coin box which is ideally suitable for residential and small business use.

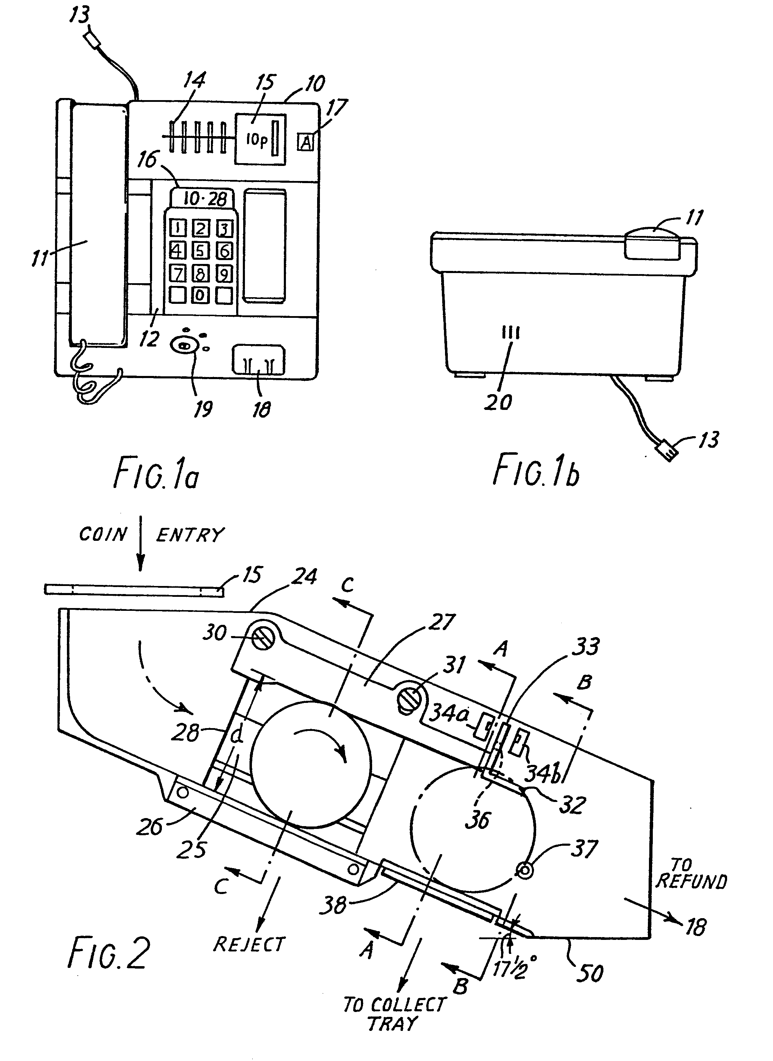

The arrangement of Figure 1a and Figure 1b, shows a payphone housing 10, with handset 11, keypad 12 and coin slot 15. The unit can be connected to a standard domestic or business line via standard line plug 13. The ringing signal from tone caller 21 is audible through apertures 20 and coins can be entered when making a call via the entry plate 15. To aid coin feed during call progress additional coins can be placed in slots 14 for later insertion as required. A display 16 associated with coin entry and other functions is provided as described below. When a call is connected via this telephone, the button 17 can be depressed manually to instigate the commencement of conversation and the charging operation. Rejected and other returned coins are available from apertures within refund plate 18.

A multiposition key operated switch 19 is provided to gain access to the internal coin collection area and to allow the owner of the telephone to override the payphone mode to allow calls to be made in the normal manner and finally a programming position which allows pertinent call cost and other data to be entered.

The payphone including the housing can be made out of plastics material to produce a lightweight device which is sufficiently strong to prevent tampering, although the potential for serious fraud or vandalism is low because the payphone will be generally located in domestic or supervised premises.

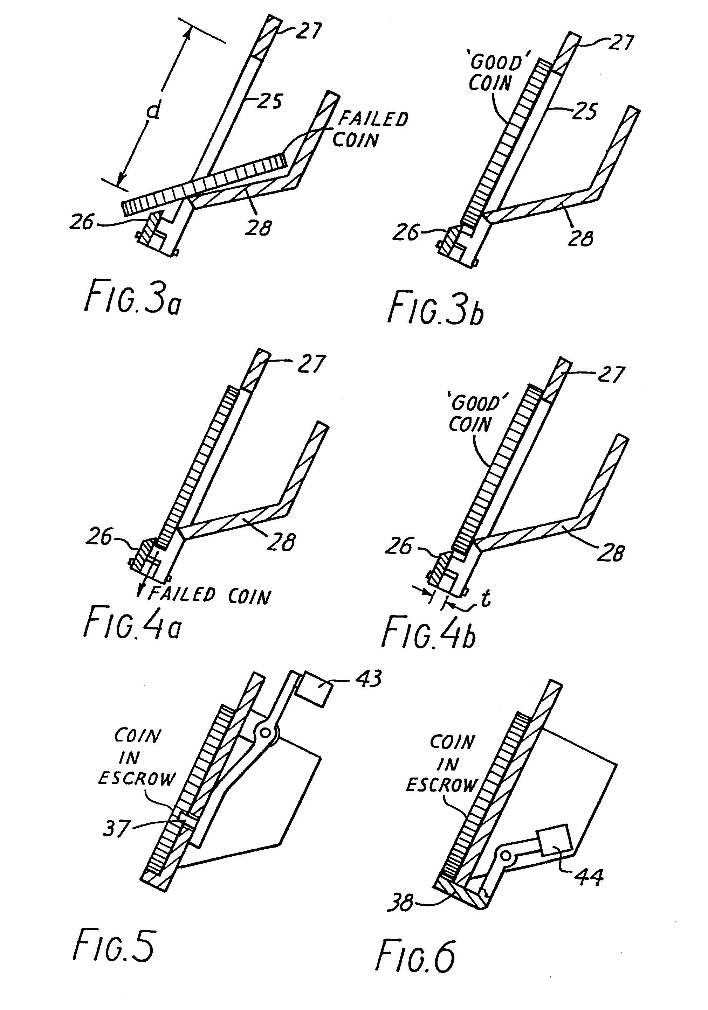

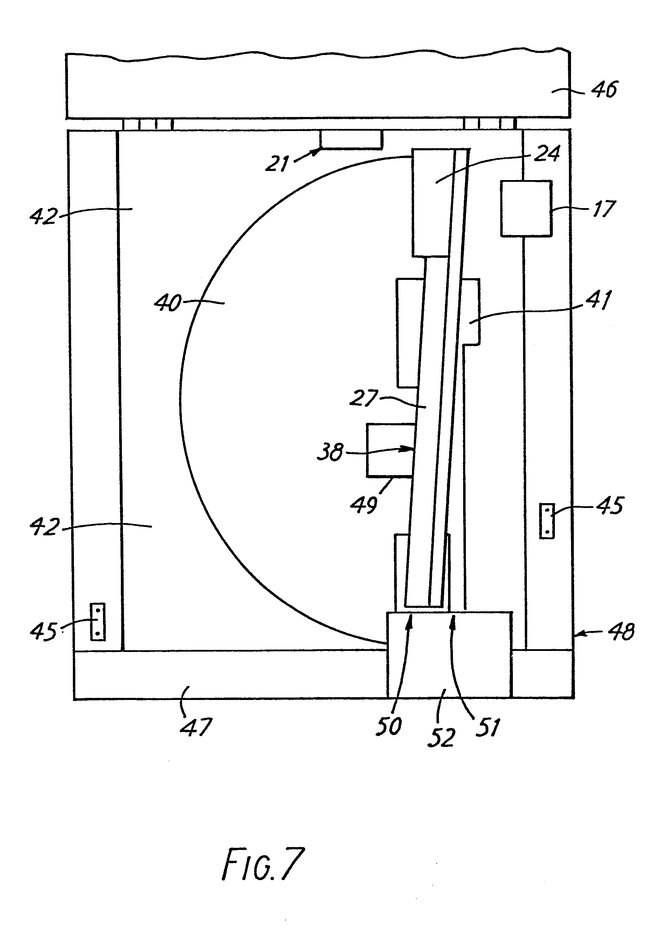

In order to keep the unit compact, a coin handling and detection mechanism is required which is small, but sufficiently selective to prevent incorrect coinage being used in the payphone, and which can be manufactured inexpensively for use in the designated market without making overall cost of the payphone prohibitive. Such a mechanism is shown in Figure 2. The coin entry plate 15 provides the first check on the coins in that the slot within the plate material (e.g., stainless steel or plastic) will be dimensioned so as to handle the correct size coin (e.g., 10p) at the same time preventing oversize (diameter and/or thickness) coins from passing through the slot. A coin which passes through the aperture in plate 15 enter chamber 24, rolls down the sloped passage and passes the window 25 (see also Figure 3) where a check on the coin for minimum diameter is performed. A coin with too small a diameter falls over and the angled plate 28 causes the coin to tip into the reject chute 41 (see Figure 7) for return to the caller. A good coin will continue its passage past the window 25. In order to prevent marginal size coins from jamming in the aperture window instead of a fixed upper portion being used to define diameter 'd' as shown in Figure 3, this has in practice been replaced by a movable plate 27 which pivots about screw 30 and is provided with a slot about screw 31 so that sufficient margin is provided to allow the coin mass to cause the plate 27 to move upwards and the coin to drop through the reject chute as before when such coins are encountered. Coins of the correct diameter will pass across the face of plate 27 normally without lifting the plate 27 (see also Figure 4). In practice by providing a rim member 26 defining thickness it is possible to provide a check on the minimum coin thickness 't' at this point also i.e, both the minimum thickness and minimum diameter are checked at the same point concurrently. The thin coin falls within the gap from the runway and falls through the window for rejection. Thus with the simple mechanism described investigations on the maximum and minimum diameter and thickness are checked out within a small physical area and at minimal constructional expense. A good coin passes to the escrow position where it is held by stop 37, until required. The stop 37 is movable to allow refund of the coin as shown in Figure 5, using for example solenoid 43. The bottom portion 38 is also movable to allow collection of the coin in the tray and can be operated using solenoid 44 (see Figure 6).

A coin as it rolls into the escrow position will cause detector finger 32 to move upwards and thisd will then lie tangentially to the run of the coin. The limb 33 also moves upwards so that aperture 36 therein moves between the transmitter and receiver portions of optical switch 34a, 34b to indicate there is a coin present at this location due to the passage of the optical beam. Subsequent coins will not be retained as plate 27 is held upwards and any coins entered will fall through the window even though they are of the correct dimensions. The elongate finger 32 ensures smooth operation by producing minimal drag on the coin and minimising bounce which could cause repeated operation of the optical switch. With non circular coins such as UK 50p pieces this finger sits on a peak and will not prevent coin rolling at refund. Coins collected in the coin box pass via a generally conical central portion 40 (see Figure 7) which distributes coins evenly through the coin box storage area 42 and prevents build-up in localised areas. A deflector or skid 49 may be provided to give additional mobility to the coins.

Any refunded coins exit from passage 50 and rejected coins exit from passage 51 of the reject chute 41. The cup 52 receives returned coins which exit from refund plate 18.

The movement of the key associated with lock 19 to its final position allows entry into the cash storage area 42 by release of locking plates 45 so that hinged lid 46 can be moved upwards. The base 48 carries a sloping front edge 47 which allows easy removal of the coins.

Although the key switch 19 allows the householder or proprietor to override the coin requirement, the phone is primarily concerned with coin payment although the calls will periodically be billed to the proprietor in the normal way. The system provides computation of individual call charge costs from the day of the week, time of day and information on the charge code of the call to provide an indication visually of the total credit period (typically in seconds) available for that particular call and for the call payment received. The credited time remaining is decremented throughout the duration of the call. Details of the different charge codes for different exchanges have typically been entered previously via the keyboard 12.

A template can be provided for the payphone owner which temporarily fits over the keyboard to indicate the functions performed by the keys when in the programming mode (e.g., time, day, charge code or rate entry). The first key depression can indicate to the system that the function marked on the template is selected and thereafter the digit marked on the key is to be entered, to keep the number of keys required to a minimum. Such operation for entry into a telephone memory is disclosed in our copending application (European 84300324.5).

Alternatively, the number data and associated charges could have been pre-entered into the system by employing programmed ROMs, for example, so that only manual time and day setting would be required. This however reduces flexibility for updating.

In the present arrangement details of the dialled number, the time of day, day of week, the remaining value coins entered, or time left during call Progress can all be provided via display 16 as well as visual instructions for operation and programming the payphone.

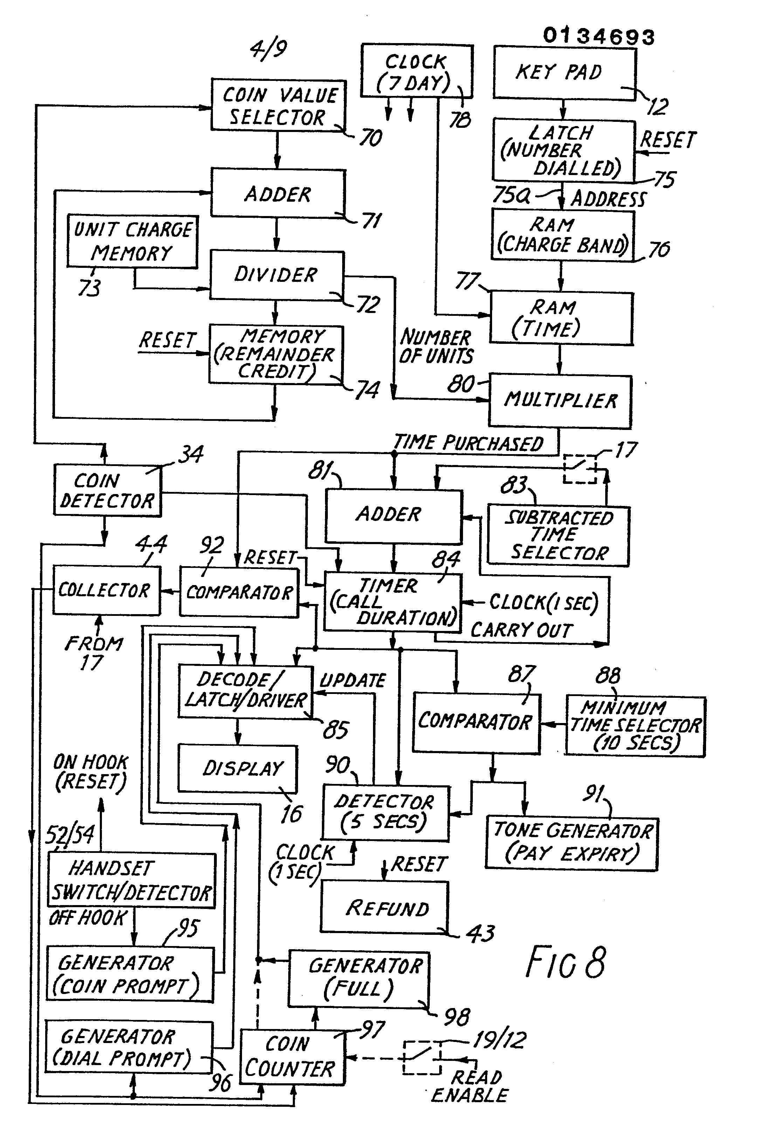

One configuration for providing this payphone operation is shown in Figure 8. In the On-hook condition a reset will have been applied to the remainder credit memory 74, call duration timer 84, refund solenoid 43, number dialled latch 75, from switch 52 or polarity detector 54. When a user lifts the handset 11 this will be detected by handset switch 52 and cause generator 95 to produce preset digital output words which pass to decorder/latch/driver 85 for conversion into the word 'COIN' in display 16 to prompt the user to insert a coin into the payphone which is then held in escrow. On receipt of a coin as detected by opto detector 34, generator 96 is actuated to generate a digital output indicative of the word 'DIAL' via decoder/driver 85 for display 16. The detector 34 also causes selector 70 to produce a digital output corresponding to the coin value received. In the case of only single coin value entry this will give a preset output (e.g., equivalent to 10 pence). There will be no remainder in credit memory 74, so the output from block 70 passes unchanged via adder 71 to divider 72 which divides this value by the unit charge value held in memory 73.   In the UK telephone network this may be 5.5 pence for 1 unit charge.   Assuming 5.5p = 1 unit, then 1 unit is the value passed to the multiplier 80 and the remainder (10 - 5.5 = 4.5p) is passed to remainder memory 74 for possible later use should further coins be inserted.   The amount of <u>time</u> available for this unit charge will depend on the call distance.   To determine the amount of time (in seconds) available for the 1 unit purchased, dialled number information is employed.

The area code or more significant dialled digits taken from the keypad 12 are stored in the number dialled latch 75.   This information is made available on the output 75a and is used as the address for the charge band RAM 76.   This RAM contains previously entered charge band data (e.g., a, b, b1 or local in UK).   The area code produces the pertinent charge band and this is used to address the time RAM 77.   The address selected will be controlled by the time band information (e.g., peak, standard, cheap rate) from real time clock 78, as a local call for example will be permitted for a longer period at certain times of the day or days of the week than at others.   The resultant time purchased for one unit, this number and this time of day is made available to multiplier 80 which multiplies it by the number of credited units (in this case = 1) from divider 72.   The resultant output from

multiplier 80 gives the total time purchased. On connection of the dialled number to the calling party, button 17 is pressed by the user and a fixed time value (e.g., minus 4 seconds) is provided by subtract selector 83 to allow for the delay between actual call connection and the user operating button 17. This value effectively subtracts the time purchased in adder 81 by the fixed time period. The operation of 17 also causes a second switch contact (not shown) to actuate collector solenoid 44 to collect the coin from escrow. Alternatively, the polarity detector is activated by the reversal of the polarity of the telephone line and an output therefrom can be used to actuate coin collection and the start of the timing operation .

The time purchased as provided by adder 81 is entered into timer 84 and made available to display 16 via the decoder and latch 85. This is extremely useful to a user because he knows how much time he has purchased for his coin, regardless of where he calls to. During call progress the time remaining in timer 84 is decremented by 1 second clocks from the real time clock 78. The timer output is periodically made available to display 16 by means of an update signal from detector 90 which causes the latches within block 85 to periodically capture the latest timer output. The detector 90 receives the output from timer 84 and detects at each clock pulse from clock 78 whenever the timer output has a last digit which is a 5 or zero to effectively update the latches in block 85 at 5 second intervals. In this manner the user has constant knowledge of how much time is left before his credit period expires and so he knows when he must finish his call or present a further coin. In practice a variable update rate is provided to keep the user informed of progress. A minimum time selector 88 provides a minimum time value output (e.g., 10 seconds) which is compared with the timer output in comparator 87. When coincidence occurs this is indicative that only 10 seconds credit remains. The charge output of the comparator enables tone generator 91 to indicate to the caller that cut off is imminent. At the same time the comparator output causes detector 90 output to be updated at 1 second clock intervals so as to cause the display to decrement at 1 second intervals. Any further coin inserted will be held in escrow until collector solenoid 44 is actuated but its value will be credited and the additional time in seconds purchased will be added to the remaining time as soon as the coin detector 34 senses coin presence. If for example the called exchange and time of day had resulted in 1 unit giving 100 seconds, then for the first coin (10 pence) there would be 1 unit (5.5p) from whole unit divider 72 and 4.5p remainder stored in memory 74. When 90 seconds has elapsed tone generator 91 operates and insertion of the coin at that point will cause selector 70 to generate a 10p signal which is added to the 4.5p remainder to give a total of 14.5p. This is divided by 5.5 (unit charge) to give the further whole units (= 2) and a new remainder of 3.5p so for this coin in fact _two_ extra units are credited so the multiplier output would constitute 200 extra seconds which added in adder 81 with the value (10 secs) carried out from timer 84 as a result of the detected coin at detector 34. The resultant total (210 seconds) is the new credited period which will be entered and decremented in counter 84 at 1 second intervals and provided for the display 16 to be updated at 5 seconds intervals.

The comparator 92 will compare the multiplier output (200 seconds) with the output of timer 84 (210 seconds). When the timer output falls to 200 seconds as the call progresses, the coincidence causes comparator 92 to automatically collect the coin held in escrow. In this way, the user does not unfairly pay for coins which were not required. A further coin could have been entered by the caller at anytime during call progress provided there is no earlier coin still held in escrow. The credited time would be added to remaining credit for any earlier coin and would nevertheless be refunded at call termination provided the remaining credit is above the value which would have actuated comparator 92 and collector 44.

Such call termination is determined by replacing the handset on hook to produce a reset for memory 74, timer 84, latch 75 and refund of any coins from escrow by actuation of solenoid 43. It is convenient to include a coin counter 97 which is incremented using the operational pulse from collector 44 each time a coin is collected. An additional input received from coin detector 34 ensures that the counter is inhibited, should a coin not be present in escrow, when a collect pulse is produced, to prevent inaccurate counting of coins. This coin count allows the payphone owner to know via display 16 how many coins are held in the coin storage area, without requiring opening of the housing. This assists in preventing jamming due to too · many coins being stored. This readout can be provided automatically when the keyswitch 19 is in a specific position for example or by pressing a key on the key pad 12 when switch 19 is in the owner mode. The coin counter can be reset when the keyswitch 19 is moved to the 'cashtray open' position, which assumes that the coins will then be removed. In addition to the counter 97, a generator 98 can be provided to produce the word 'FULL' in the display 16 via decoder/latch/driver 85 when a maximum count is present (e.g., 100 coins) to discourage further coin receipts. The system can still be available for emergency calls not requiring coin entry ('999' calls in UK).

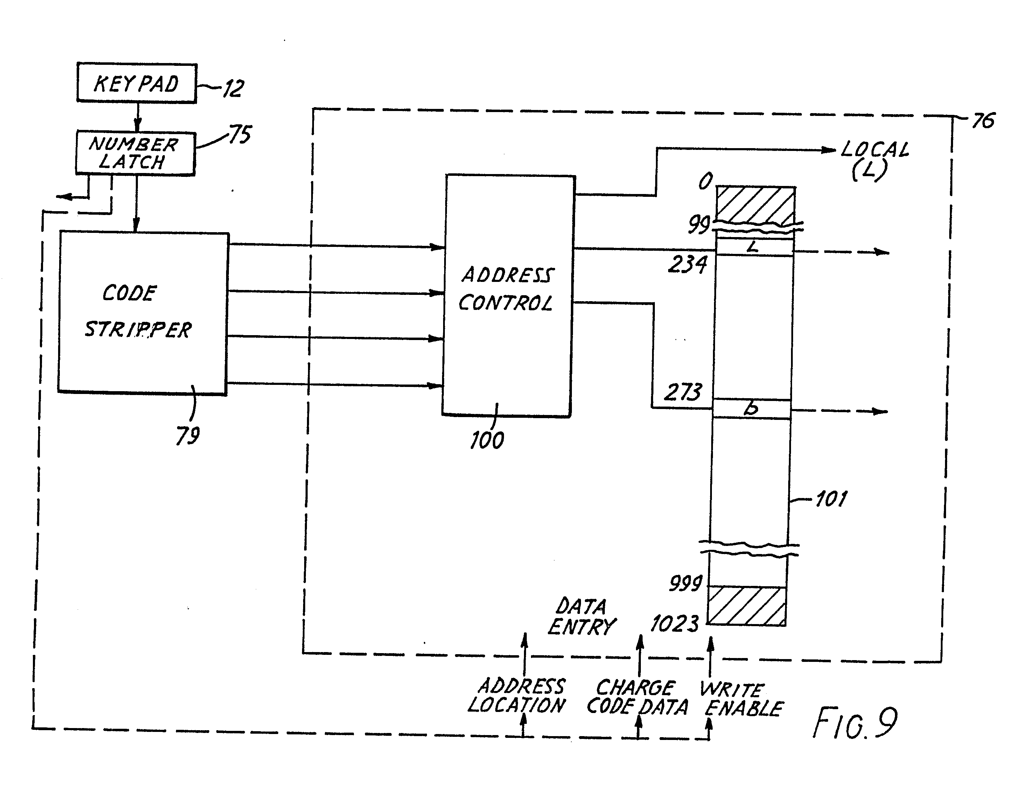

One arrangement employing the keyboard operation for accessing the RAM 76 of Figure 8 is shown in more detail in Figure 9. A number dialled via key pad 12 is capture by latch 75 and can be modified if necessary by code stripper 79 so that only the most significant digits are employed. The stripped information passes to the RAM 76 which includes an address control 100 and memory 101.

The stripped digits associated with national calls which are assigned call letters can be used to define the memory address via control 100. The control prevents local calls with a first digit 9 from going across to the memory and a simple local signal (e.g., 4 bit word) is provided for passage to the time RAM 77.

Local calls starting with zero, pass via the address control block 100 to access the relevant memory location within RAM 101. Thus called exchange 0234 will cause location 234 to be accessed and the digital information equivalent to L (say) will be output as a read operation of RAM 101 to RAM 77 for computation. In this way no local call cost errors are generated. The information available for read out is still retained by the memory after the readouts stop.

Similarly other exchange codes access their equivalent memory address (e.g.,0273 goes to address 273) where the pertinent charge letter is stored.

Thus the UK exchange codes are typically used as the basis for the actual memory addresses.

Although the code information stored in memory 101 could be provided during manufacture using a ROM for example, the destination of the unit would have to be known to ensure the correct exchange relationships. An alternative approach which is possible using the arrangement described and which is preferable, is to provide a purchaser with a list for entry into the RAM via the keyboard, or the purchaser can make use of the telephone code book provided to subscribers to provide the data base for entry. The keyboard 12 can share functions as described above.

The keyboard 12 can be used to program the store 101 by using one of the keys as an 'entry' key. This can then provide a 'write enable' signal for the RAM to write in data passed from latch 75.

The information can comprise both the memory address location to be written into (i.e. equivalent to the exchange code) and the charge code to be entered, the passage of such information being illustrated by the broken lines from latch 75. In practice the address information could alternatively pass via control 100, and charge data entry would be effected as a 'write' operation to replace the normal 'read' operation.

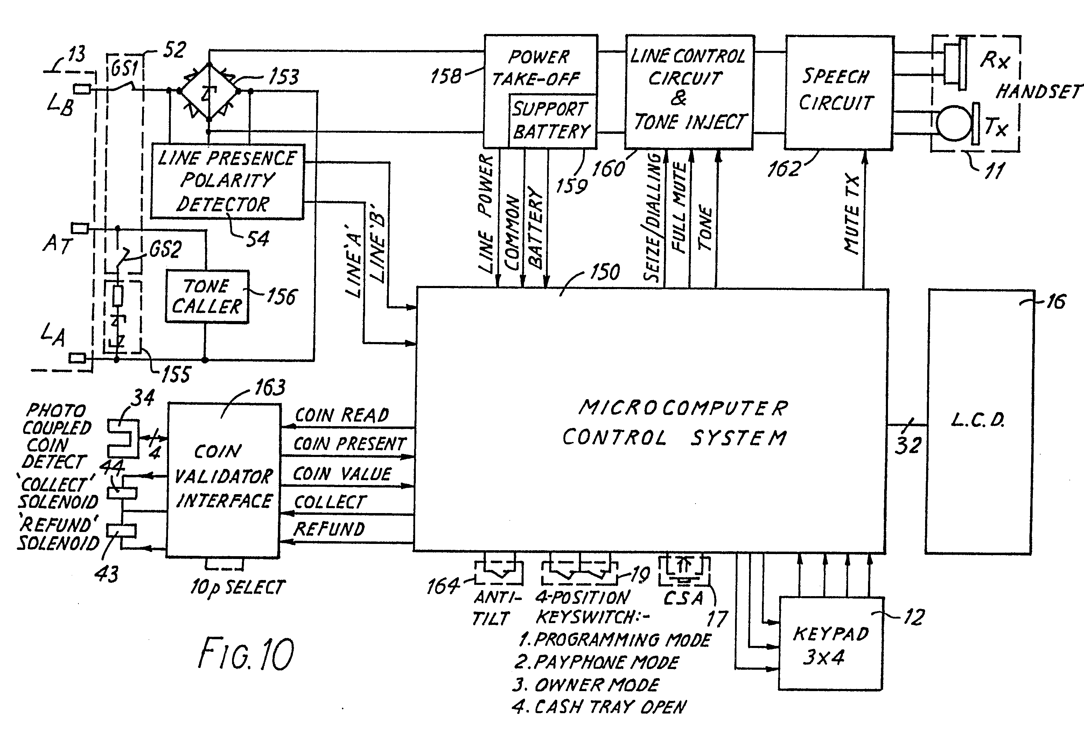

As an alternative to the Figure 8 arrangement a microprocessor based control system can be employed to provide the desired flexibility of operation and a high level of utility and an embodiment with the required interfacing is shown in Figure 10.

The microprocessor system 150 will be provided therein with standard hardware blocks, viz CPU, ROM, RAM and display drive/decoder clock modules (e.g., Hitachi HMCS 40 series). The memory will be expanded as necessary to be sufficiently large to handle the charge band data associated with the different exchanges. Typically the exchange code can be stripped from the remaining dialled digits and used as the memory address location accessed for the desired charge band information stored therein. Input multiplexing can be provided as necessary to cope with the keypad and other switch functions.

The microprocessor or microcomputer system 50 is interfaced to the coin handling devices 34, 43 and 44 of Figures 2, 5 and 6 via validator interface 163. This allows the low power signals from the microprocessor to be buffered to drive the higher power requirements of the optoswitch 34, and solenoids 43 and 44.

The standard line plug 13 connects the payphone to the telephone line and hook-switch 52 operates in normal manner to allow, in the on-hook position, the ringing tone caller 21 to respond to AC ringing signals which may be applied to the line, or in the off-hook position to connect line feed current to the speech circuit 162, from the exchange, regulated by zener diodes and resistor configuration 155 for the ringing tone caller 21, or off hook to apply the 15v d.c. from the exchange via the bridge 153 to line presence detector 54. Additionally hook switch 52 in the off-hook state together with component network 155 provides an anti-tinkle network to extension telephones which may be connected to the same line. Detector 54 allows commencement of a call to be determined as some exchanges reverse the polarity on the line to indicate that the call has been answered. This change of state is passed to the microprocessor system 150 to initiate call cost calculations. Where such line reversal is not provided, manual instigation can be effected by operating button 17. Power for the system can be taken from the line via block 158 and back up can be provided by battery 159 to prevent memory loss and maintained the real time clock of the microcomputer system 150. Line signals pass to the handset via control circuit 160 and speech circuit 162. The mouthpiece transmitter in the handset can be muted if required till a valid coin is collected and an audible prompt tone can be entered via circuit 160. A retained coin can be passed to the storage tray by operating the solenoid 44 either in response to line reversal or operation of button 17. An anti-tilt switch (e.g., mercury switch) 164 is expediently provided to prevent tampering with the device, in addition to preventitive measures incorporated in the software, and can disconnect the call.

The key switch 19 is shown as having 4 possible positions. In the first position the system can be programmed via the keyboard 12 and entered data monitored on display 16 as discussed above. The keyboard can be used in this mode to set the clock for time of day and day of the week and to enter lists of charge codes associated with various exchanges as provided by the 'Post Office' code book for example associated with the callers exchange. Thus the system will know on subsequently dialling a number whether it is a local call, and 'a', 'b', 'b1' call, a international call rate 1 - 5 and whether (from the internal clock) it is a peak, standard or cheap rate call. The unit charge (in pence) is also entered and from these parameters the cost and or time allowed for a call will be calculated. Changing to payphone mode (position 2) the unit can be operated with coin entry and the key removed. The system may or may not be configured to allow international calls to be made in this mode, but 999 calls can be made without coin insertion.

In the payphone mode, on lifting the handset, the display 16 will produce the message 'COIN' which can flash on and off if desired.   The message 'DIAL' will be provided on receipt of a coin.   The handset microphone is disabled when a coin has been deposited and held in escrow, and a recognisable charge code dialled.   On dialling the desired number, the microprocessor system will receive information on this dialled number via the keyboard 12 and this is used to look up the internal memory to determine the appropriate charge band.   If the exchange is one which has not been preprogrammed then the caller is charged at the 'b' rate, for inland trunk calls.   For international calls, if allowed, charge rate 5 will be assumed.

The time available prior to cut-off (T) is calculated for the formula -

$$T = [\text{Integer part of } (V/U)] \times P-C$$

where V is the total value of coins inserted, U is the preset unit charge and P is the preset time allowed per unit charge, C is a constant to account for delay in pressing the CSA button 17 (e.g., 4 seconds)..

This time will run from the line polarity reversal or the operation of button 17.   A few seconds before cut off, the system provides a tone via block 160 to indicate to the user that a further coin is required. If a coin had already been deposited then no tone will be applied.   Failure to provide this in the remaining period will terminate the call.   When the telephone is not in use, the display may optionally provide a time display.

Additional features, such as total coinage received for the owners use can be provided as well as a record since last emptied, together with a limiting function to indicate when the cash storage area is full or nearly full.

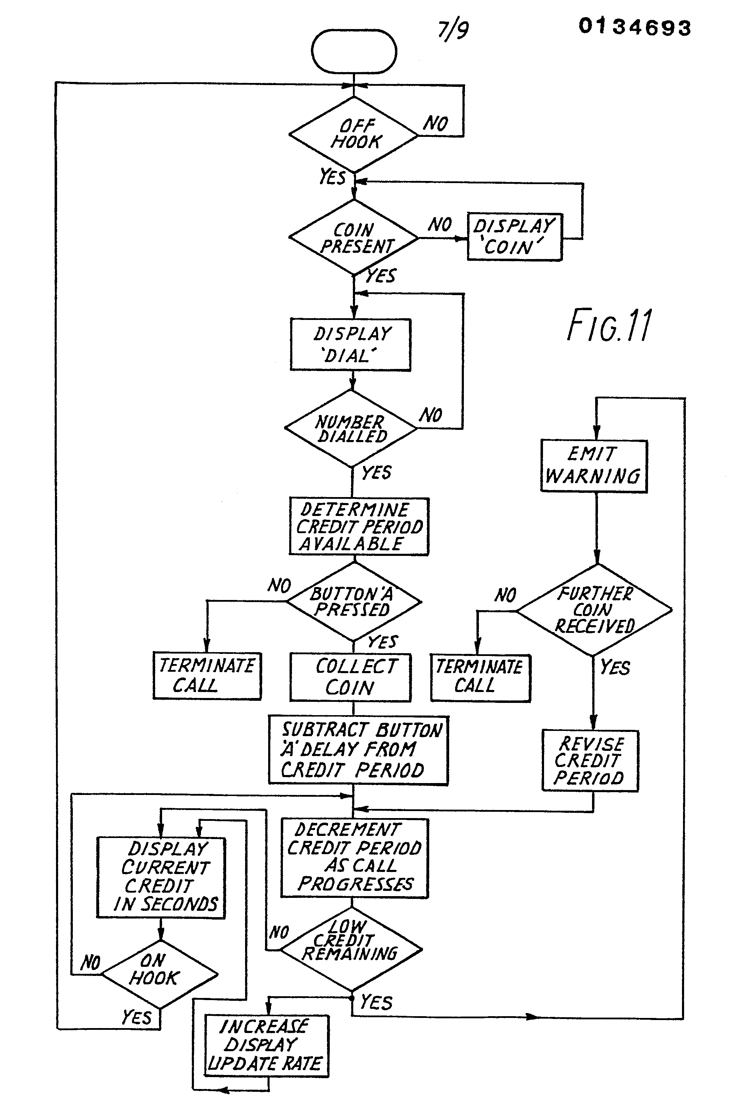

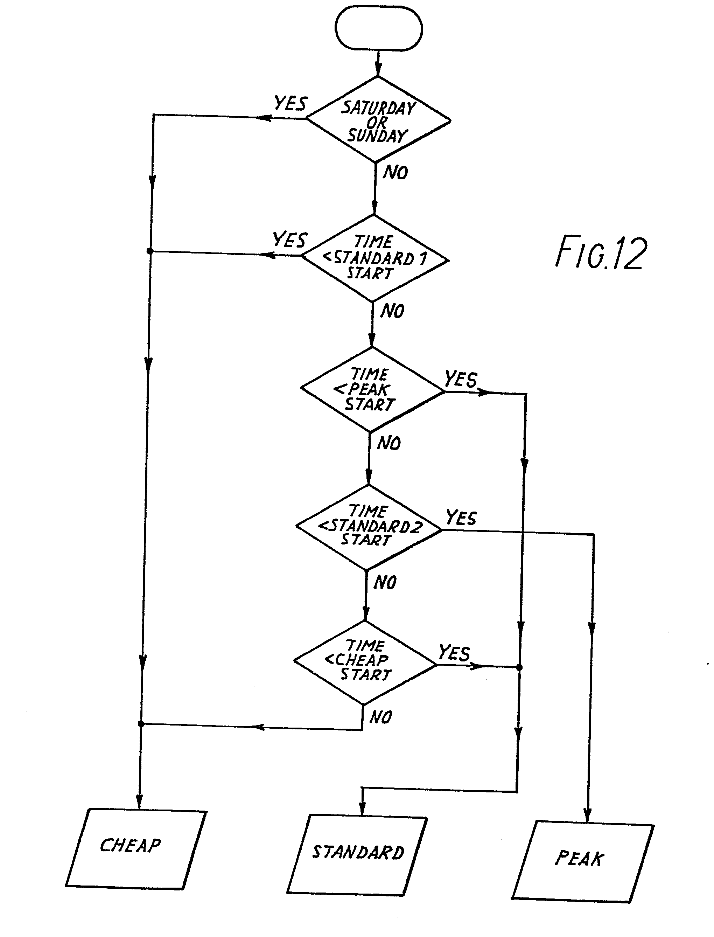

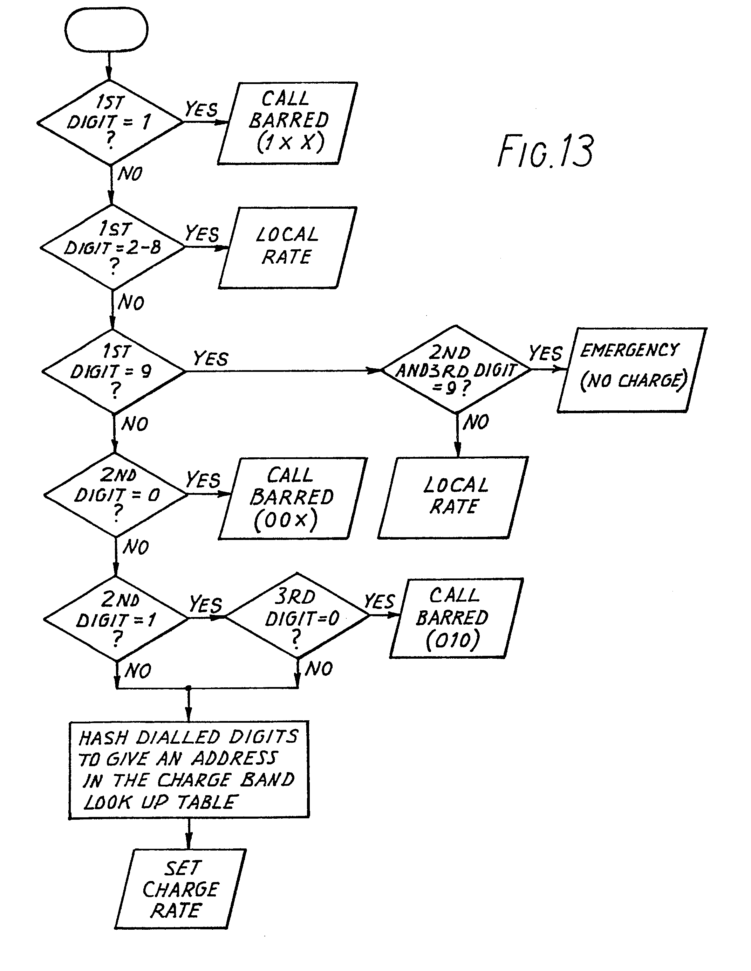

The Figure 11 flowchart summarises the operation of the microprocessor system in the payphone mode. It can be seen that steps from lifting the handset until termination of the call are illustrated with appropriate action, including displayed prompts, call credit time calculation, and increased display update rate towards call credit expiry. The credit period calculation itself is derived from the time band and charge band computation. The time band computator is provided from the flowchart of Figure 12 and that of the charge band from Figure 13. Symbol generation can additionally be provided, for example an 'ARROW' symbol, pointing to button 17 could be employed in the display 16 after initial coin entry and dialling, when the call is connected to remind the user of the necessity to press this button. By ensuring that the latching function for the keypad is sufficient to hold all the dialled digits, then this can be employed for repertory dialling.

When the payphone is not being used, the display could be arranged to display time information to operate as a normal clock, if desired as this is available from internal clock 78.

Because the system is arranged to continuously compute the time remaining from the coinage value entered without recourse to any external information, such as time or cost data from the exchange, it allows a self-contained unit to be provided which can be connected and operated from any standard telephone line, unlike dedicated call box devices. The capability of overriding the payphone function to allow the owner to make calls without prepayment, means that a single unit can be used in situations where two phones would otherwise be required.

The unit, although sophisticated can be constructed at a relatively low cost, making it possible for it to be purchased outright or alternatively be provided at low rental. The coin validity configuration assists in keeping costs low, yet retains sufficient versatility to discriminate between unwated coins and those correctly proffered. A lightweight yet tough housing allows a desk-top, portable arrangement to be provided.

CLAIMS:

1. A payphone characterised by: display means (16) for displaying information pertaining to a telephone call, credit means (34, 38) for receiving an item for use as payment for a call, validator means (25 - 28) for determining the validity of the item received, and decremental calculation means (80, 84; 150) for determining the remaining time period of credit available for the connected call during call progress, for display by the display means.

2. A payphone as claimed in Claim 1, wherein the calculating means includes updating means (87, 88, 90) operable to provide a decremental time display updated at a first rate during call progress when the remaining time exceeds a predetermined time period and at a second and more rapid update rate when the remaining time is below said predetermined period.

3. A payphone as claimed in Claim 1 or 2, including manually operable means (17) for initiating the commencement of the call and compensation means (83) for decrementing the remaining credit by a period equivalent to the delay between the caller operating the manually operable means and actual call connection.

4. A payphone as claimed in Claim 1, 2 or 3, wherein the calculating means includes memory means (76) for storing charge rate information relating to telephone numbers, detector means (75) for detecting number called, access means (75a) for accessing the memory to determine the charge rate pertinent to the detected number, whereby the time credit period can be determined without intervention from the telephone exchange.

5. A payphone as claimed in Claim 4, wherein the calculating means includes time of day determining means (78) for modifying the charge rate if the charge is dependent on the time of day.

6. A payphone as claimed in any preceding claim, including means for designating a predetermined unit charge (73) which is of a value less than that assigned to the credit item received, means for determining (72) the number of whole charge units available for that item and retention means (74) for retaining any credit remainder less than a whole charge unit for possible future use, whereby the number of whole charge units credited is used for time calculation by said calculation means.

7. A payphone as claimed in Claim 6, wherein adder means (71) are provided to take into account any credit remainder held in said retention means on receipt of a further credit item during call progress, to determine if additional whole credit units have accrued.

8. A payphone as claimed in any preceding claim, wherein the credit means includes holding means (32) for temporarily holding a further credit item received after call commencement and said calculating means including means (70) for crediting additional time to the decrementing time display for said temporarily held item.

9. A payphone as claimed in Claim 8, including collection means (38, 44) for automatically collecting the temporarily held item when the earlier calculated credit time period expires, and refund means (43) for automatically returning the temporarily held item should the call terminate prior to expiry of the earlier calculated credit time period.

10. A payphone as claimed in Claim 8 or 9, including inhibit means (27) operable by said holding means to prevent retention of any further item during the period that an item is held by said holding means.

11. A payphone as claimed in any preceding claim including means (95, 96) for generating user prompts for display in said display means to assist operation by the user.

12. A payphone as claimed in Claim 11, wherein the generator means includes means (95) for generating a first signal pertaining to requesting coin entry and means (96) for generating a second display signal pertaining to requesting number dialling.

13. A payphone as claimed in any preceding claim, wherein the credit means is configured to receive coins and including coin storage means (42) for receiving a plurality of coins, counting means (97) for counting the number of coins stored and means (98) for indicating on the display means when the coin storage means is deemed to be full, to discourage further coin entry.

14. A payphone as claimed in Claim 13, wherein the counter means includes access means (19/12) configured to allow the current coin total to be displayed to an authorised user.

15. A payphone as claimed in any preceding claim, wherein key operable switch means (19) are provided to override the payphone operation to allow calls to be made without credit item receipt.

16. A payphone as claimed in any preceding claim including a lightweight housing (10) with an integral coin credit item collection box (42) to allow user portability and further including tilt detector means (64) for interrupting call operation to discourage fraudulent coin return.

17. A payphone as claimed in claim 4 or 5 wherein the detector means includes holding means (75) for retaining generated number information and the accessing means includes address generating means (100) for accessing the memory.

18. A payphone as claimed in claim 17 wherein the memory is a RAM (101) configured to be both written into and read in response to keyboard generated instructions.

19. A payphone as claimed in claim 17 or 18 wherein the address generating means is configured to provide memory addressing based on exchange codes.

FIG.1a

FIG.1b

FIG.2

COIN ENTRY

REJECT

TO COLLECT TRAY

TO REFUND

0134693

FAILED COIN

d

27

25

26

28

FIG.3a

'GOOD' COIN

27

25

26

28

FIG.3b

27

26

28

FAILED COIN

FIG.4a

'GOOD' COIN

27

26

28

t

FIG.4b

43

COIN IN ESCROW

37

FIG.5

COIN IN ESCROW

38

44

FIG.6

FIG.7

**FIG 8**

0134693

FIG. 9

FIG. 10

0134693

0134693

FIG.11

```
        ┌──────────┐
        └──────────┘
             │
    ┌────────┤
    │        ▼
    │     ╱ OFF ╲    NO
    │    ╱ HOOK  ╲─────────┐
    │    ╲       ╱         │
    │     ╲     ╱          │
    │       YES            │
    │        │             │
    │        ▼◄────────────┼──────────┐
    │    ╱ COIN ╲   NO  ┌──────────┐  │
    │   ╱ PRESENT╲──────│ DISPLAY  │  │
    │   ╲        ╱      │ 'COIN'   │  │
    │    ╲      ╱       └──────────┘  │
    │      YES                        │
    │       │                         │
    │       ▼◄────────────────┐       │
    │  ┌──────────┐           │       │
    │  │ DISPLAY  │           │       │
    │  │ 'DIAL'   │           │       │
    │  └──────────┘           │       │
    │       │                 │       │
    │       ▼                 │       │
    │    ╱ NUMBER ╲    NO      │       │
    │   ╱ DIALLED  ╲───────────┘       │
    │   ╲         ╱                    │
    │    ╲       ╱                     │
    │      YES                         │
```

OFF HOOK — NO
YES
COIN PRESENT — NO → DISPLAY 'COIN'
YES
DISPLAY 'DIAL'
NUMBER DIALLED — NO
YES
DETERMINE CREDIT PERIOD AVAILABLE

EMIT WARNING

BUTTON 'A' PRESSED — NO → TERMINATE CALL
YES → COLLECT COIN

FURTHER COIN RECEIVED — NO → TERMINATE CALL
YES → REVISE CREDIT PERIOD

SUBTRACT BUTTON 'A' DELAY FROM CREDIT PERIOD

DISPLAY CURRENT CREDIT IN SECONDS

DECREMENT CREDIT PERIOD AS CALL PROGRESSES

ON HOOK — NO
YES

LOW CREDIT REMAINING — NO
YES

INCREASE DISPLAY UPDATE RATE

FIG.12

FIG.13